# EUROPÄISCHE PATENTANMELDUNG

(11) **EP 2 175 181 A2**
(43) Veröffentlichungstag der Anmeldung: **14.04.2010**
(21) Anmeldenummer: 09012698.8
(22) Anmeldetag: 07.10.2009
(51) Int. Cl.: F16K 1/22, F24F 7/06

(54) **Drosselelement für lufttechnische Sicherheitseinrichtungen, insbesondere für Laborabzüge**

(30) Priorität: 08.10.2008 DE 202008013356 U
(71) Anmelder: TROX GmbH, 47506 Neukirchen-Vluyn (DE)
(72) Erfinder: Lange, Stefan, 47506 Neukirchen-Vluyn (DE)
(74) Vertreter: DR. STARK & PARTNER

(57) **Zusammenfassung**

Die Erfindung betrifft ein Drosselelement für lufttechnische Sicherheitseinrichtungen, insbesondere für Laborabzüge, die einen geschlossenen Raum aufweisen, wobei der Raum einerseits über ein Zwischenelement zur Erzielung einer, insbesondere gleichmäßigen, Absaugung über die gesamte Querschnittfläche des Raumes an einen Luftabzugkanal angeschlossen ist und andererseits eine mit einem Stellelement, z. B. einem Schiebefenster, verschließbare Öffnung aufweist. Um ein Drosselelement anzugeben, das eine schnellere bauseitige Montage eines Laborabzuges bei gleichzeitig geringerer Höhe des komplett installierten Laborabzuges ermöglicht, soll das Drosselelement in das Zwischenelement integriert sein.

## Beschreibung

Die Erfindung betrifft ein Drosselelement für lufttechnische Sicherheitseinrichtungen, insbesondere für Laborabzüge, die einen geschlossenen Raum aufweisen, wobei der Raum einerseits über ein Zwischenelement zur Erzielung einer, insbesondere gleichmäßigen, Absaugung über die gesamte Querschnittfläche des Raumes an einen Luftabzugkanal angeschlossen ist und andererseits eine mit einem Stellelement, z. B. einem Schiebefenster, verschließbare Öffnung aufweist.

Innerhalb von Laboratorien sind die Platzverhältnisse in Bezug auf raumlufttechnische Anlagen sehr begrenzt. Aus diesem Grund ist man bestrebt, einerseits die Drosselelemente so klein wie möglich zu gestalten. Andererseits sind Laborabzüge Bestandteil der sicherheitstechnischen Einrichtung, für deren Wirksamkeit ein genau einzuhaltender Volumenstrom entscheidend ist.

Ein Laborabzug ist über das Zwischenelement und das Drosselelement, wie z.B. einen Luft-Volumenstromregler, an einem bauseitigen Luftabzugkanal angeschlossen. Das Zwischenelement ist hinsichtlich der Größe so auf die Querschnittsfläche des Raumes des Laborabzuges abgestimmt, dass eine möglichst gleichmäßige Absaugung der Luft aus dem Raum des Laborabzuges gewährleistet ist. Das Zwischenelement - auch als Abzugsdom bezeichnet - ist auf der Oberseite des Laborabzuges befestigt. Vor Ort wird auf den bereits installierten Laborabzug oberseitig auf das freie Ende des Zwischenelementes das Drosselelement montiert. Das Drosselelement wird dann direkt oder indirekt über einen Verbindungsstück mit dem bauseitigen Abluftkanal verbunden.

Nachteilig hierbei ist, dass die Installation des Laborabzuges aufwändig ist und auch bauseitig eine hinreichend hoher Bauraum gegeben sein muss.

Aufgabe der Erfindung ist es daher, die vorgenannten Nachteile zu vermeiden und ein Drosselelement anzugeben, das eine schnellere bauseitige Montage eines Laborabzuges bei gleichzeitig geringerer Höhe des komplett installierten Laborabzuges ermöglicht.

Diese Aufgabe wird dadurch gelöst, dass das Drosselelement in das Zwischenelement integriert ist. Durch die Integration des Drosselelementes in das Zwischenelement wird die Bauhöhe des Laborabzuges deutlich reduziert, da nur noch ein Bauteil auf die Oberseite des Laborabzugs montiert werden muss. Das freie Ende des Zwischenelementes kann entweder direkt mit dem bauseitigen Abluftkanal verbunden werden. Es ist aber auch selbstverständlich möglich, dass zwischen dem Zwischenelement und dem Abluftkanal noch ein Verbindungsstück, das beispielsweise als Stutzen oder Schiebestutzen ausgebildet ist, vorgesehen ist. Bei dem Drosselelement kann es sich beispielsweise um ein Schiebelement handeln, das einteilig oder auch mehrteilig ausgebildet ist. Andere Ausgestaltungen eines Drosselelementes, wie z. B. in Form einer Klappe oder Walze, sind selbstverständlich möglich.

Es liegt auf der Hand, dass der Querschnitt des Zwischenelementes und des darin integrierten Drosselelementes beliebig ausgestaltet sein kann. Das Zwischenelement kann beispielsweise eine runde oder eckige, wie zum Beispiel rechteckige, quadratische, sechseckige, Bauform aufweisen. Auch die Materialien können verschieden sein. Die Klappe kann einseitig oder mittig gelagert sein. Auch eine Ausbildung als Walze ist selbstverständlich möglich.

Vorzugsweise kann sich das Zwischenelement mindestens über die halbe Breite des Raumes, vorzugsweise im Wesentlichen über die Breite des Raumes erstrecken.

Bei einem Ausführungsbeispiel kann als Drosselelement ein Luft-Volumenstromregler vorgesehen sein, wobei der Luft-Volumenstromregler eine Klappe aufweist, die in Abhängigkeit von der Position des Stellelementes verschwenkbar ist. Bei einer solchen Ausgestaltung ist der Luft-Volumenstromregler und die Klappe in dem Zwischenelement integriert.

Die Klappe kann mit einem Stelltrieb, insbesondere mit einem Motor, verbunden sein. Damit ist die Klappe motorisch verstellbar.

Das Drosselelement, insbesondere das als Luft-Volumenstromregler ausgebildete Drosselelement, kann eine Messeinrichtung zur Erfassung von Differenzdrücken des in dem Drosselelement, insbesondere in dem als Luft-Volumenstromregler ausgebildeten Drosselelement, strömenden Mediums mit zumindest zwei in Strömungsrichtung im Abstand hintereinander angeordneten Entnahmeöffnungen aufweisen. In diesem Fall ist in das Zwischenelement nicht nur das Drosselelement, sondern auch die Messeinrichtung integriert.

Bei der Messeinrichtung kann es sich beispielsweise um eine Blende, um Sensorrohre oder eine Messung nach dem Venturiprinzip handeln. Zur Messung des Volumenstroms können geeignete Messverfahren, wie z. B. mittels einer Blende, einer Venturidüse oder dergleichen, eingesetzt werden. Beispielsweise kann der Wirkdruck vor und hinter der Klappe, sofern das Drosselelement beispielsweise als Luft-Volumenstromregler ausgebildet ist, abgegriffen werden. Die gemessene Druckdifferenz kann dann auf einen Messumformer zur Ermittlung des Volumenstroms gegeben werden.

Die Messeinrichtung kann mit einer den Stelltrieb mit einem Signal beaufschlagenden Auswerte- und/oder Regeleinrichtung verbunden sein. In Abhängigkeit von der gemessenen Druckdifferenz und dem daraus ermittelten Volumenstrom kann dann die Stellung des Drosselelementes eingestellt werden.

Im Folgenden wird ein in den Zeichnungen dargestelltes Ausführungsbeispiel der Erfindung erläutert. Es zeigen:
- Fig. 1: ein Laborabzug mit einem integrierten erfindungsgemäßen als Luft-Volumenstromregler ausgebildeten Drosselelement und
- Fig. 2: ein Ausführungsbeispiel eines als Luft-Volumenstromregler ausgebildeten Drosselelementes in vergrößerter Darstellung.

In allen Figuren werden für gleiche bzw. gleichartige Bauteile übereinstimmende Bezugszeichen verwendet.

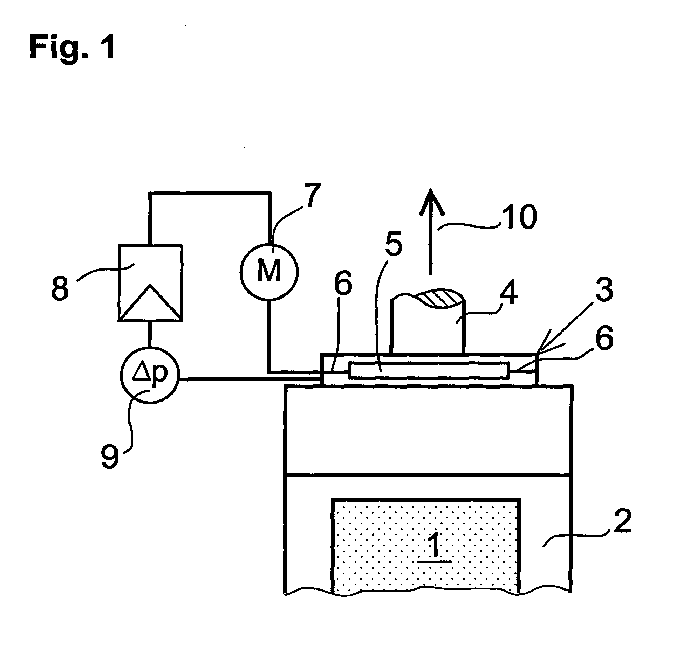

In Fig. 1 ist eine Seitenansicht auf einen Laborabzug, der einen geschlossenen Raum 1 aufweist, dargestellt. Vorderseitig weist der Raum 1 eine mit einem Stellelement, z. B. mit einem Schiebefenster 2, verschließbare Öffnung auf.

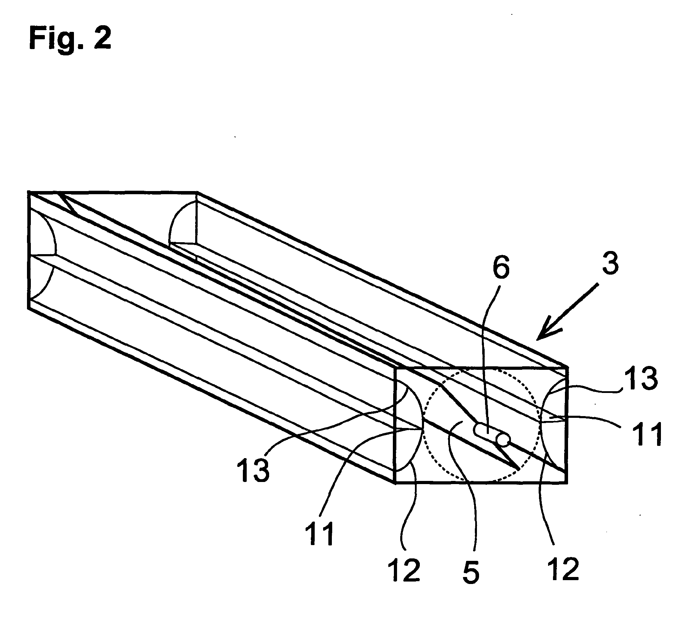

Auf der Oberseite ist ein Zwischenelement 3 befestigt, dass - wie in Fig. 2 deutlich zu erkennen ist - bei dem dargestellten Ausführungsbeispiel einen rechteckigen Querschnitt aufweist. Das Zwischenelement 3 erstreckt sich etwa über ¾ der Breite des Raumes 1 des Laborgerätes.

Bei dem in Fig. 1 dargestellten Ausführungsbeispiel ist das dem Laborabzug gegenüberliegende Ende des Zwischenelementes 3 über ein Verbindungsstück 4, das in dem dargestellten Ausführungsbeispiel als Stutzen mit einem runden Querschnitt ausgebildet ist, mit einem nicht dargestellten bauseitigen Luftabzugkanal verbunden.

Es ist aber auch durchaus möglich, dass das Zwischenelement 3 direkt mit dem Luftabzugkanal, d. h. ohne ein dazwischen liegendes Verbindungsstück 4, verbunden ist.

Wie deutlich in den Fig. 1 und 2 erkennbar, ist in dem Zwischenelement 3 ein Drosselelement integriert. Bei den in den Figuren dargestellten Ausführungsbeispielen ist das Drosselelement als Luft-Volumenstromregler mit einer Klappe 5 ausgebildet. Selbstverständlich sind auch andere Ausgestaltungen eines Drosselelementes möglich. Die Klappe 5 ist in dem dargestellten Ausführungsbeispiel mittig gelagert. Hierzu ist auf jeder kurzen Kante der Klappe 5 ein Achsstummel 6 vorgesehen.

Für eine motorische Verstellung der Klappe 5 ist ein Stelltrieb 7 vorgesehen. Der Stelltrieb 7 ist mit einer nicht näher dargestellten Auswerte- und/oder Regeleinrichtung 8 verbunden. Ferner ist eine Messeinrichtung 9 vorgesehen, über die eine Druckdifferenz in der Absaugung, beispielsweise in dem Zwischenelement 3 gemessen und hieraus ein Volumenstrom bestimmt wird.

Zur Bestimmung der Druckdifferenz sind zwei nicht näher dargestellte Entnahmeöffnungen vorgesehen, wobei die eine Entnahmeöffnung, beispielsweise vor und die andere Entnahmeöffnung beispielsweise hinter der Klappe 5 angeordnet ist.

Bei dem dargestellten Ausführungsbeispiel ist in Absaugrichtung 10 gesehen auf Höhe der beiden Achsstummel 6 an den beiden Längsseiten des Zwischenelementes 3 je eine Strömungsbarriere vorgesehen. Jede Strömungsbarriere weist einen in etwa senkrecht zur Strömungsrichtung 10 ausgerichteten Steg 11 auf, der sowohl an- als auch abströmseitig jeweils einen in Richtung der angrenzenden Längswand weisende gekrümmte Wandung 12, 13 aufweist, die jeweils zusammen mit dem Steg 11 und der betreffenden Längswand des Zwischenelementes 3 eine an- und abströmseitige Kammer bilden.

In jeder Kammer kann beispielsweise eine Entnahmeöffnung zur Messung der Druckdifferenz vorgesehen sein. Es liegt auf der Hand, dass - sofern in den Wandungen 12, 13 selbst keine Ausnehmungen sind - dann beispielsweise der an- bzw. abströmseitige freie Rand der Wandung 12 bzw. 13 zu der angrenzenden Längswand des Zwischenelementes 3 - zumindest in Teilbereichen - von der Innenseite der Längswand des Zwischenelementes 3 beabstandet ist.

## Patentansprüche

1. Drosselelement für lufttechnische Sicherheitseinrichtungen, insbesondere für Laborabzüge, die einen geschlossenen Raum (1) aufweisen, wobei der Raum (1) einerseits über ein Zwischenelement (3) zur Erzielung einer, insbesondere gleichmäßigen, Absaugung über die gesamte Querschnittfläche des Raumes (1) an einen Luftabzugkanal angeschlossen ist und andererseits eine mit einem Stellelement, z. B. einem Schiebefenster (2), verschließbare Öffnung aufweist, **dadurch gekennzeichnet, dass** das Drosselelement in das Zwischenelement (3) integriert ist.

2. Drosselelement nach dem vorhergehenden Anspruch, **dadurch gekennzeichnet, dass** sich das Zwischenelement (3) mindestens über die halbe Breite des Raumes (1), vorzugsweise im Wesentlichen über die Breite des Raumes (1) erstreckt.

3. Drosselelement nach Anspruch 1 oder 2, **dadurch gekennzeichnet, dass** als Drosselelement ein Luft-Volumenstromregler vorgesehen ist, wobei der Luft-Volumenstromregler eine Klappe (5) aufweist, die in Abhängigkeit von der Position des Stellelementes verschwenkbar ist.

4. Drosselelement nach dem vorhergehenden Anspruch, **dadurch gekennzeichnet, dass** die Klappe (5) mit einem Stelltrieb (7), insbesondere mit einem Motor, verbunden ist.

5. Drosselelement nach einem der vorhergehenden Ansprüche, **dadurch gekennzeichnet, dass** das Drosselelement, insbesondere das als Luft-Volumenstromregler ausgebildete Drosselelement, eine Messeinrichtung (9) zur Erfassung von Differenzdrücken des in dem Drosselelement, insbesondere in dem als Luft-Volumenstromregler ausgebildeten Drosselelement, strömenden Mediums mit zumindest zwei in Strömungsrichtung (10) im Abstand hintereinander angeordneten Entnahmeöffnungen aufweist.

6. Drosselelement nach dem vorhergehenden Anspruch, soweit dieser auf Anspruch 4 rückbezogen ist, **dadurch gekennzeichnet, dass** die Messeinrichtung (9) mit einer den Stelltrieb (7) mit einem Signal beaufschlagenden Auswerte- und/oder Regeleinrichtung (8) verbunden ist.
